# EUROPEAN PATENT APPLICATION

(11) **EP 4 600 167 A1**
(43) Date of publication of application: **13.08.2025**
(21) Application number: 23874892.5
(22) Date of filing: 04.10.2023
(51) Int. Cl.: B65B 61/02

(54) **BEVERAGE MANUFACTURING APPARATUS, SERVER, BEVERAGE MANUFACTURING METHOD, INFORMATION PROCESSING METHOD, AND PROGRAM**

(30) Priority: 06.10.2022 JP 2022161711
(71) Applicant: Suntory Holdings Limited, Osaka 530-8203 (JP)
(72) Inventor: INOUE Ippei, Soraku District, Kyoto 619-0284 (JP)
(74) Representative: Vossius & Partner Patentanwälte Rechtsanwälte mbB
(86) International application number: PCT/JP2023/036175
(87) International publication number: WO 2024/075766

(57) **Abstract**

With conventional techniques, it has not been possible to produce a contained beverage to which a design is applied using design information transmitted from an external source such as a terminal apparatus 3. It is possible to produce a contained beverage to which a design is applied using design information transmitted from an external source, using a beverage production apparatus 1 including: a design receiving unit 121 configured to receive design information transmitted from the terminal apparatus 3; and a design application unit 133 that applies a design to the contained beverage, using the design information.

## Description

### Technical field

The present invention relates to a beverage production apparatus and the like for producing a beverage to which a design is applied.

### Background Art

Conventionally, there have been techniques for forming patterns in a liquid phase such as a beverage (see, for example, Patent Document 1).

In addition, there have been conventional drinking cups that have a high printing capacity and can form high-quality images (see, for example, Patent Document 2).

### Background Art

### Patent Documents

Patent Document 1: WO 2018/218264A1
Patent Document 2: JP 2004-532775A

### Summary of Invention

### Technical Problem

However, with the conventional techniques, it has not been possible to produce a contained beverage to which a design is applied using design information transmitted from an external source. Note that a contained beverage to which a design is applied may also be referred to as a beverage to which a design is applied.

In particular, with the conventional techniques, it has not been possible to produce a contained beverage to which a design is applied using, for example, design information created by a user.

In addition, with the conventional techniques, it has not been possible to produce a contained beverage to which a design is applied using, for example, design information that is based on a user's wishes.

In addition, with the conventional techniques, it has not been possible to apply a design only to appropriate beverages, for example.

In addition, with conventional techniques, for example, the rights holder of the design information used for a beverage can be rewarded for producing a contained beverage to which the design is applied.

Furthermore, with the conventional techniques, for example, it has not been possible to associate images, such as photographs of contained beverages to which designs are applied, with design information, and to manage and utilize them.

### Solution to Problem

A beverage production apparatus according to a first aspect of the present invention is a beverage production apparatus including: a design receiving unit configured to receive design information transmitted from a terminal apparatus; and a design application unit configured to apply a design to a contained beverage, using the design information.

With such a configuration, it is possible to produce a contained beverage to which a design is applied using design information transmitted from an external source. Here, there are no restrictions on the time at which design information is transmitted.

A beverage production apparatus according to a second aspect of the present invention is the beverage production apparatus according to the first aspect of the invention further including: an instruction receiving unit configured to receive a beverage production instruction transmitted from a terminal apparatus and including a design identifier that identifies design information, wherein the design receiving unit receives the design information identified by the design identifier contained in the beverage production instruction from a server that manages a design identifier and design information in association with each other.

With such a configuration, it is possible to receive design information that is based on a user's wishes from a server, and produce a contained beverage to which a design is applied using the design information.

A beverage production apparatus according to a third aspect of the present invention is the beverage production apparatus according to the first or the second aspect of the invention, wherein the design application unit applies a design within a beverage of the contained beverage, using the design information.

With such a configuration, it is possible to produce a contained beverage to which a design is applied within the beverage using design information transmitted from an external source.

A beverage production apparatus according to a fourth aspect of the present invention is the beverage production apparatus according to the first or the second aspect of the invention, wherein the design application unit applies a design to a container of the contained beverage, using the design information.

With such a configuration, it is possible to produce a contained beverage in which a design is applied to the container, using design information transmitted from an external source.

A beverage production apparatus according to a fifth aspect of the present invention is the beverage production apparatus according to one of the first to fourth aspects of the invention, further including: a judgment unit configured to reference a condition storage unit in which a beverage condition that is a condition for a beverage attribute value is stored in association with design information or a design attribute value, and to judge, for the contained beverage, whether or not the design information received by the design receiving unit or a design attribute value of the design information and a beverage attribute value of the contained beverage to which the design application unit applies the design satisfy the beverage condition, wherein the design application unit applies a design to the contained beverage, using the design information when the judgment unit judges that the beverage condition is satisfied.

With such a configuration, it is possible to apply a design only to an appropriate beverage.

A server according to a sixth aspect of the present invention is a server including: a first server receiving unit configured to receive design information from a terminal apparatus; a first server accumulation unit configured to accumulate the design information in a storage unit in which design-related information that includes design information is stored, in a pair with a design identifier that identifies the design information, in association with a design identifier that identifies design information that is a basis for a design to be applied to a contained beverage; a second server receiving unit configured to receive a design identifier that identifies design information to be transmitted to a beverage production apparatus; a first server acquisition unit configured to acquire design information that is identified by the design identifier received by the second server receiving unit, from the storage unit; and a first server transmitting unit configured to transmit the design information acquired by the first server acquisition unit.

With such a configuration, it is possible to assist in producing a contained beverage to which a design is applied using design information transmitted from an external source.

A server according to a seventh aspect of the present invention is the server according to the sixth aspect of the invention, wherein the design-related information contains a rights holder identifier that identifies a rights holder of design information, and the server further includes a reward processing unit configured to, when the first server transmitting unit transmits the design information, perform reward processing to reward a rights holder that is identified by a rights holder identifier paired with the design information.

With such a configuration, it is possible to reward the rights holder of the design information used.

A server according to an eighth aspect of the present invention is the server according to the sixth or the seventh aspect of the invention, further including: a third server receiving unit configured to receive a captured image associated with a design identifier; a second server accumulation unit configured to accumulate a captured image received by the third server receiving unit, in association with the design identifier; a fourth server receiving unit configured to receive an image viewing instruction corresponding to a design identifier from a terminal apparatus; a second server acquisition unit configured to acquire a captured image paired with the design identifier corresponding to the image viewing instruction received by the fourth server receiving unit; and a second server transmitting unit configured to transmit the captured image acquired by the second server acquisition unit to the terminal apparatus.

With such a configuration, it is possible to manage captured images of a contained beverage in which design information is used, in association with the design information.

A server according to a ninth aspect of the present invention is the server according to the seventh or the eighth aspect of the invention, further including: a rights holder information receiving unit configured to receive rights holder information regarding a new rights holder of design information, corresponding to a design identifier; and a rights holder update unit configured to add a rights holder identifier that identifies the new rights holder to design-related information paired with the design identifier corresponding to the rights holder information received by the rights holder information receiving unit.

With such a configuration, it is possible to change the rights holder of design information.

A server according to a tenth aspect of the present invention is the server according to one of the seventh to the ninth aspects of the invention, wherein the reward processing unit performs the reward processing for a rights holder identified by the new rights holder identifier when the first server transmitting unit transmits design information paired with the new rights holder identifier.

With such a configuration, it is possible to appropriately reward the new rights holder of design information.

A server according to an eleventh aspect of the present invention is the server according to one of the seventh to the tenth aspects of the invention, wherein the first server accumulation unit accumulates the design information in a pair with a design identifier, in association with an NFT.

With such a configuration, it is possible to appropriately protect design information.

A server according to a twelfth aspect of the present invention is the server according to the eleventh aspect of the invention, wherein the design information is associated with one or more design attribute values, and the first server accumulation unit judges whether or not the one or more design attribute values associated with the design information satisfy a NFT condition, and if the NFT condition is satisfied, the first server accumulation unit accumulates the design information in association with the NFT, and if the NFT condition is not satisfied, the first server accumulation unit does not accumulate the design information in association with the NFT.

With such a configuration, it is possible to realize appropriate protection for design information.

A server according to a thirteenth aspect of the present invention is the server according to one of the seventh to the twelfth aspects of the invention, wherein the design-related information includes a usage condition of the design information for third parties, the server further incudes a judgment unit configured to judge whether or not a usage condition paired with the design identifier received by the second server receiving unit is satisfied, and the first server transmitting unit transmits the design information only when the judgment unit judges that the usage condition is satisfied.

With such a configuration, only appropriate user can use design information.

### Advantageous Effects of Invention

With the beverage production apparatus according to the present invention, it is possible to produce a contained beverage to which a design is applied using design information transmitted from an external source.

### Brief Description of Drawings

FIG. 1 is a conceptual diagram of a beverage production system A according to a first embodiment.
FIG. 2 is a block diagram of the beverage production system A according to the same.
FIG. 3 is a block diagram of a beverage production apparatus 1 according to the same.
FIG. 4 is a block diagram of a server 2 according to the same.
FIG. 5 is a flowchart illustrating an example of an operation of the beverage production apparatus 1 according to the same.
FIG. 6 is a flowchart illustrating an example of an operation of the server 2 according to the same.
FIG. 7 is a flowchart illustrating an example of an operation of a terminal apparatus 3 according to the same.
FIG. 8 is a diagram showing a design management table according to the same.
FIG. 9 is a conceptual diagram of processing performed by the beverage production system A according to the same.
FIG. 10 is a diagram showing an example of a screen according to the same.
FIG. 11 is a diagram showing an example of a captured image according to the same.
FIG. 12 is an image of a design being drawn within a beverage according to the same.
FIG. 13 is a block diagram of a server 4 according to a second embodiment.
FIG. 14 is a flowchart illustrating an example of an operation of the server 4 according to the same.
FIG. 15 is a flowchart illustrating an example of judgment processing according to the same.
FIG. 16 is a schematic diagram of a computer system according to the above embodiments.
FIG. 17 is a block diagram of the computer system according to the same.

### Description of Embodiments

Hereinafter, embodiments of a beverage production apparatus and the like will be described with reference to the drawings. In the embodiments, components with the same reference numerals perform similar operations, and therefore repeated explanations may be omitted.

### First Embodiment

The present embodiment describes a beverage production apparatus that receives design information and produces one or more contained beverages to each of which a design is applied using the design information. It is preferable that the beverage production apparatus applies the design in the beverage. However, the beverage production apparatus may also apply the design to the beverage container.

The beverage here is, for example, coffee, tea, beer, whiskey, wine, etc., and the type of beverage is not limited. Examples of beverages according to the present invention include, for example, water, non-alcoholic beverages, and alcoholic beverages. Examples of non-alcoholic beverages include tea-based drinks, coffee drinks, cocoa drinks, non-alcoholic beer alternatives, carbonated drinks, functional beverages, fruit- and vegetable-based drinks, dairy drinks, plant-based milks, and flavored water. Examples of tea-based drinks include black tea drinks and sugar-free tea drinks. Examples of sugar-free tea drinks include green tea drinks, oolong tea drinks, barley tea drinks, brown rice tea drinks, pearl barley tea drinks, and sugar-free black tea drinks. Examples of coffee drinks include packaged coffee and liquid coffee. The term "non-alcoholic beer alternatives" refers to carbonated drinks with a beer-like flavor that are substantially free of alcohol. Here, the term "non-alcoholic beer alternatives" does not exclude beverages that contain trace amounts of alcohol that are below the detectable limit. Examples of carbonated drinks include cola-flavored drinks, clear sodas, ginger ale, fruit juice-based sodas, carbonated dairy drinks, and sugar-free sodas. Examples of functional beverages include sports drinks, energy drinks, and wellness drinks. Examples of fruit- and vegetable-based drinks include 100% fruit juices, fruit-infused drinks, non-alcoholic beverages with low fruit juice content, fruit drinks containing fruit pieces, fruit pulp drinks, and smoothies. Examples of dairy drinks include milk, drinking yogurt, non-alcoholic probiotic beverages, dairy soft drinks, and milkshakes. Examples of plant-based milk beverages include soy milk drinks (soy milk and soy-based drinks), oat milk, almond milk, and others. Examples of alcoholic beverages include beer, beer-based drinks, whiskey, shochu, sake, shochu highball, liqueurs, cocktails, spirits, wine, and brandy.

Examples of the beverages according to the present invention include jelly drinks, frozen drinks, frozen cocktails, soups (e.g., miso soup, pork soup), broths (e.g., consomme soup, potage soup, cream soup, Chinese soup), gel-like foods (e.g., curry, stew), noodle soups (e.g., udon, soba, ramen), liquid seasonings (e.g., dressings, sauces, soup base, soy sauce), dipping sauces (e.g., yakiniku sauce, yakitori sauce), and liquid preparations (e.g., liquid medicine, drink supplements). The raw liquid ingredients for foods and beverages, such as jelly liquid before setting, ice cream liquid before freezing, and soy milk with magnesium chloride (before setting into tofu), can also be used as beverages according to the present invention.

In addition, the present embodiment describes a beverage production apparatus that receives a beverage production instruction including a design identifier from a terminal apparatus, acquires design information identified by the design identifier from a server, and produces one or more contained beverages to which a design is applied using the design information.

Furthermore, the present embodiment describes a beverage production apparatus that determines whether or not a beverage to be produced is a beverage that is capable of incorporating a design using design information, and only when the beverage is a beverage that is capable of incorporating the design, produces a contained beverage to which the design is applied using the design information.

In the present embodiment, information X being associated with information Y means that information Y can be acquired from information X, or information X can be acquired from information Y, and the method of association is not limited. For example, information X and information Y may be linked together, may exist in the same buffer, information X may be included in information Y, or information Y may be included in information X.

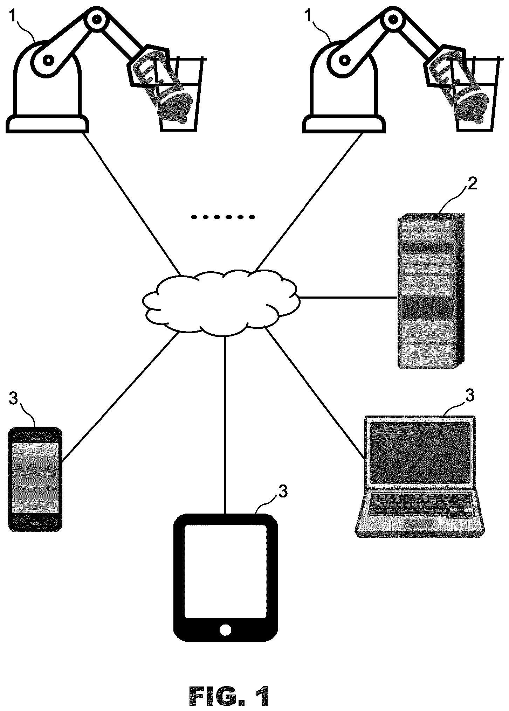

FIG. 1 is a conceptual diagram of a beverage production system A according to the present embodiment. The beverage production system A includes one or more beverage production apparatuses 1, a server 2, and one or more terminal apparatuses 3.

Each beverage production apparatus 1 is an apparatus for producing a contained beverage to which a design is applied using design information. Each beverage production apparatus 1 is an apparatus that is usually installed in a place where beverages are served. Examples of places where beverages are served include stores that serve beverages and hotels that provide beverages at ceremonies such as weddings. However, there are no restrictions on the location. Examples of stores that serve beverages include cafes and restaurants, but there are no restrictions on the type of stores.

It is preferable that each beverage production apparatus 1 is an apparatus that applies a design using design information in the beverage in the container. However, each beverage production apparatus 1 may also be an apparatus that applies a design using design information to the container into which the beverage is poured. The container is, for example, a paper cup, but it may also be , for example, a cup made of resin, and there are no restrictions on the material and type of the container.

Each beverage production apparatus 1, when a design is to be applied within the beverage in the container using design information, is an apparatus that applies a design to the beverage in the container containing the beverage, using the design information. Each beverage production apparatus 1, when applying a design using design information to the container, is an apparatus that applies a design using design information to the container containing a beverage, or an apparatus that applies a design using design information to an empty container and then pours a beverage into the container.

The server 2 is an apparatus that manages design information and provides design information to the beverage production apparatuses 1 or the terminal apparatuses 3. The server 2 manages, for example, design information received from the terminal apparatuses 3. The server 2 also manages, for example, captured images received from the terminal apparatuses 3. Note that the captured images are, for example, images of drinks with designs applied. The server 2 is, for example, a cloud server or an ASP server, and there are no restrictions on the type of the server 2.

The terminal apparatuses 3 are terminals used by users. Examples of the users here include a person who specifies a design and orders a drink (a customer), a person who serves drinks to customers (a store clerk, a hotel employee, etc.), and a person who provides design information (a designer). Examples of the terminal apparatuses 3 include a personal computer, a tablet terminal, a smart phone, a watch-type device, or the like, and there are no restrictions on the type of the terminal apparatuses.

It is preferable that the beverage production apparatuses 1 and the server 2, and the server 2 and the terminal apparatuses 3, are capable of communicating with each other via the Internet, a LAN, or the like. The beverage production apparatuses 1 and the terminal apparatuses 3 may also be capable of communicating with each other via the Internet, a LAN, or the like.

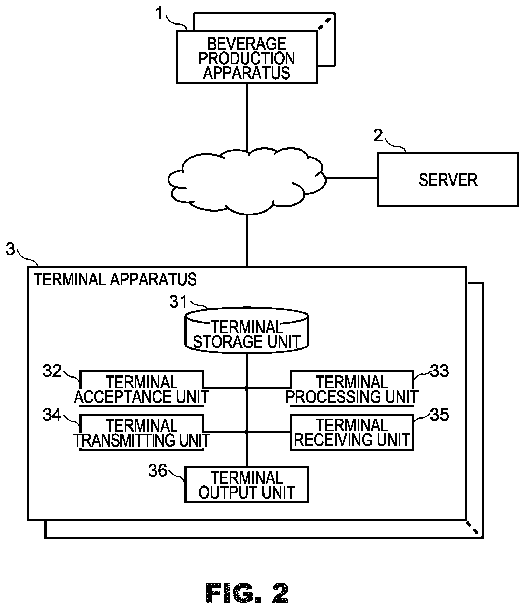

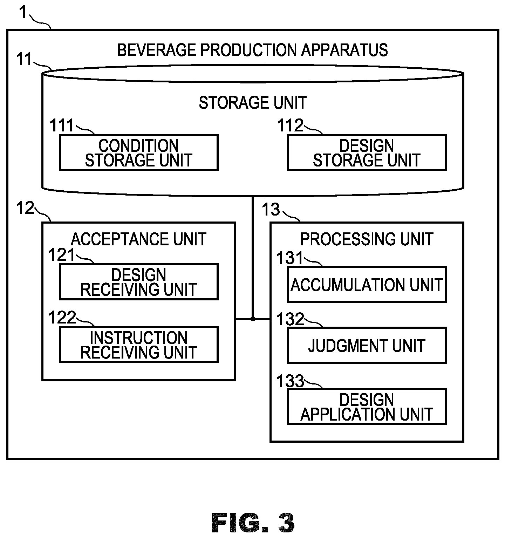

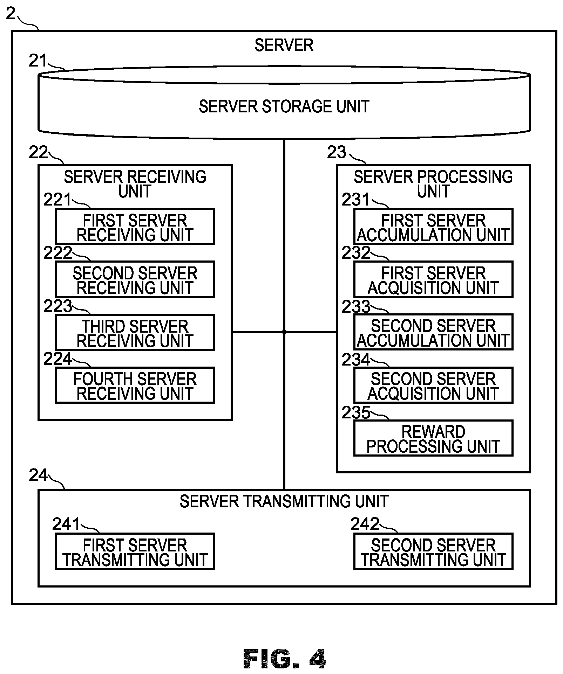

FIG. 2 is a conceptual diagram of the beverage production system A according to the present embodiment. FIG. 3 is a block diagram of each beverage production apparatus 1. FIG. 4 is a block diagram of the server 2.

Each beverage production apparatus 1 includes a storage unit 11, an acceptance unit 12, and a processing unit 13. The storage unit 11 includes a condition storage unit 111 and a design storage unit 112. The acceptance unit 12 includes a design receiving unit 121 and an instruction receiving unit 122. The processing unit 13 includes an accumulation unit 131, a judgment unit 132, and a design application unit 133.

The server 2 includes a server storage unit 21, a server receiving unit 22, a server processing unit 23, and a server transmitting unit 24. The server receiving unit 22 includes a first server receiving unit 221, a second server receiving unit 222, a third server receiving unit 223, and a fourth server receiving unit 224. The server processing unit 23 includes a first server accumulation unit 231, a first server acquisition unit 232, a second server accumulation unit 233, a second server acquisition unit 234, and a reward processing unit 235. The server transmitting unit 24 includes a first server transmitting unit 241 and a second server transmitting unit 242.

Each terminal apparatus 3 includes a terminal storage unit 31, a terminal acceptance unit 32, a terminal processing unit 33, a terminal transmitting unit 34, a terminal receiving unit 35, and a terminal output unit 36.

The storage unit 11 included in each beverage production apparatus 1 stores various kinds of information. Examples of the various kinds of beverage information include beverage conditions, which will be described later, design information, which will be described later, and one or more pieces of beverage information.

Beverage information is information related to the beverage to be provided. Beverage information typically corresponds to a beverage identifier. Each piece of beverage information contains, for example, one or more beverage attribute values. Each beverage identifier is information that identifies a beverage. It can be said that each beverage identifier is information that identifies a beverage type. Each beverage identifier is, for example, an ID or a beverage name (for example, coffee, tea, orange juice, beer, whiskey, or wine). The beverage attribute values are attribute values of the beverage. Examples of beverage attribute values include a beverage type (for example, fruit juice, alcoholic beverage, or carbonated drink) and a design flag. The design flag is a flag that indicates whether or not a design can be applied within the beverage of the package beverage. A design flag of "1" indicates, for example, that a design can be applied within the beverage, and a design flag of "0" indicates, for example, that a design cannot be applied within the beverage.

The condition storage unit 111 stores one or more beverage conditions. The beverage conditions are conditions regarding beverages that is capable of incorporating a design or beverages that are not capable of incorporating a design. The beverage conditions are, for example, conditions regarding one or more beverage attribute values, or conditions regarding one or more beverage attribute values associated with design information or design attribute values. Examples of beverage conditions include "beverage attribute value != carbonated drink". "!=" indicates no match. "Beverage attribute value != carbonated drink" is a condition indicating that the design cannot be applied to carbonated drinks. Examples of beverage conditions include "design flag = 1". A beverage condition "design flag = 1" is a condition indicating that only the beverages identified by a beverage identifier that is paired with the design flag "1", which is beverage attribute value, are capable of incorporating the design. Needless to say, the beverage conditions may be embedded in the program.

The design storage unit 112 stores one or more pieces of design information. Design information is information that is the basis for the design to be applied to the contained beverage. Design information is information that specifies the design to be presented. The design is, for example, a pattern, a character string, or a combination of a pattern and a character string. The pattern is, for example, a still image, an icon, or a logo, and there are no restrictions on the content of the pattern. Design information is, for example, jpeg, TIF, Gif, ai, Shift-JIS, Unicode, DXF, DWG, STEP, IGES, X_T, SAT, or the like, but there are no restrictions on the type of design information. Design information is, for example, a file, but there are no restrictions on the data structure or the like.

The design information in the design storage unit 112 is associated with, for example, design identifiers. Each design identifier is information that identifies design information. Each design identifier is, for example, an ID or a design name. The design information in the design storage unit 112 is associated with, for example, one or more creator identifiers and one or more rights holder identifiers. Each creator identifier indicates a person who created design information. Each creator identifier indicates, for example, a person who holds the moral rights of design information. Each rights holder identifier indicates a person who has the rights with respect to design information. Examples of rights include property rights and copyrights. It is preferable that the creator identifiers and the rights holder identifiers may be different, but they may also be the same. Typically, when design information is transferred, the creator identifier and the rights holder identifier are different.

The acceptance unit 12 accepts various kinds of instructions and information. Examples of various kinds of instructions and information include design information and a beverage production instruction.

Any input means, such as a touch panel, a keyboard, a mouse, a menu screen, or the like, may be employed to input various kinds of instructions and information.

The beverage production instruction is an instruction to produce a contained beverage. For example, the beverage production instruction contains a design identifier. For example, the beverage production instruction contains a beverage identifier.

The design receiving unit 121 receives design information transmitted from the terminal apparatuses 3. Design information transmitted from a terminal apparatus 3 may be design information transmitted from the terminal apparatus 3 and stored in the server 2, or design information transmitted directly from the terminal apparatus 3. When design information is transmitted directly from a terminal apparatus 3, the terminal apparatus 3 may be the terminal belonging to the creator of the design information, or may be the terminal that received the design information from the server 2. That is to say, when a design to be applied to a contained beverage is applied to a contained beverage, there are no restrictions on the route by which the design information that is the basis for the design is received.

The design receiving unit 121 receives, for example, design information identified by a design identifier contained in a beverage production instruction from the server 2, which manages the design identifier and the design information in association with each other.

The instruction receiving unit 122 receives a beverage production instruction transmitted from a terminal apparatus 3. For example, the instruction receiving unit 122 receives a beverage production instruction transmitted from a terminal apparatus 3 and including a design identifier that identifies design information. For example, the instruction receiving unit 122 receives a beverage production instruction containing design information from a terminal apparatus 3.

The processing unit 13 performs various kinds of processing. Examples of the various kinds of processing include the processing performed by the accumulation unit 131, the processing performed by the judgment unit 132, and the processing performed by the design application unit 133.

For example, the processing unit 13 performs pouring processing to pour a beverage into a container. In such a case, the beverage production apparatus 1 includes one or more tanks (not shown) for holding the beverage. Note that pouring processing is a well-known technique, and therefore a detailed description thereof will be omitted. For example, the processing unit 13 pours a beverage identified by a beverage identifier contained in a received or accepted beverage production instruction into a container.

The accumulation unit 131 at least temporarily accumulates the design information received by the design receiving unit 121 in the design storage unit 112.

The judgment unit 132 judges whether or not the one or more beverage conditions in the condition storage unit 111 are satisfied. For example, with respect to a contained beverage, the judgment unit 132 judges whether or not the design information received by the design receiving unit 121 or the design attribute values of the design information and the beverage attribute value of the contained beverage to which the design application unit 133 applies the design satisfy the beverage conditions.

The design application unit 133 applies design using design information to a contained beverage. For example, the design application unit 133 transmits a design identifier contained in the beverage production instruction received by the instruction receiving unit 122 or the beverage production instruction accepted by the acceptance unit 12 to the server 2, receives design information identified by the design identifier from the server 2, and applies a design to the contained beverage, using the design information.

For example, the design application unit 133 applies design using the design information received by the design receiving unit 121 to a contained beverage. For example, the design application unit 133 applies design using the design information stored in the design storage unit 112 to the contained beverage.

For example, the design application unit 133 applies a design within a beverage of the contained beverage, using the design information. Applying a design in a beverage can be said to be printing the design in the beverage. The technique for printing a design in a beverage can be realized using a well-known technique such as that described in Patent Document 1, and therefore a detailed description thereof will be omitted. The liquid or the like used to print a design in the beverage is edible. There are no restrictions on the material or method used to print a design in a beverage.

Note that the viscosities of the liquids or the like used to print a design in the beverage are preferably not less than 0.8 mPa·s and not more than 6 Pa·s at 25°C. Within this range, diffusion of the liquids or the like into the beverage is easily suppressed, so that the design can be maintained in the beverage for a long period of time. From this viewpoint, at 25°C, the viscosities are more preferably not more than 3 Pa·s and even more preferably not more than 1 Pa·s. At 25°C, the viscosities are preferably not less than 1 mPa·s and not more than 100 mPa·s, and even more preferably not less than 1 mPa·s and not more than 50 mPa·s.

The viscosities of the beverages in the containers are preferably not less than 0.8 mPa·s and not more than 6 Pa·s at 25°C. Within this range, diffusion of the liquid or the like into the beverage is easily suppressed, so that the design can be maintained in the beverage for a long period of time. From this viewpoint, at 25°C, the viscosities are more preferably not more than 3 Pa·s and even more preferably not more than 1 Pa·s. At 25°C, the viscosities are preferably not less than 1 mPa·s and not more than 100 mPa·s, and even more preferably not less than 1 mPa·s and not more than 50 mPa·s.

Note that the viscosities of the liquids or the like used to print a design in a beverage and the viscosity of the beverage may be more than or substantially the same as each other. Here, these viscosities can be measured by a well-known method, such as a method using a tuning fork vibro viscometer (for example, SV-10, manufactured by A & D Co., Ltd.).

The ratio of the density of the beverage to the densities of the liquids used to print the design in the beverage (the density of the beverage divided by the density of each of the liquids or the like) used when printing the design to the beverage) is not less than 0.9 and not more than 1.1. When this ratio is not less than 0.9 and not more than 1.1, it is possible to prevent the liquids or the like from floating or sinking in the beverage. From this viewpoint, this ratio is more preferably not less than 0.92 and not more than 1.08, and even more preferably not less than 0.95 and not more than 1.05.

For example, the design application unit 133 applies a design to the container of a contained beverage, using the design information. It can be said that applying a design to a container is printing a design on the container. In addition, the container may already contain a beverage at the time of printing, or the beverage may be poured into the container after the design is printed on the container. For example, ink is used in the processing performed to apply a design to the container. The processing performed to apply a design to the container is a well-known technique, and therefore a detailed description thereof will be omitted.

Note that the container to which a design is applied may also be considered to include parts such as a label, a cap, and the like that are combined with the container into which the beverage is directly filled. In addition, it is also preferable that the container for the contained beverage is environmentally friendly and highly recyclable. In addition, the container for the contained beverage may be edible.

It is preferable that the design application unit 133 applies the design using the design information to the contained beverage only when the judgment unit 132 judges that the beverage conditions are satisfied. It is preferable that the design application unit 133 applies the design using the design information within the beverage of the contained beverage only when the judgment unit 132 judges that the beverage conditions are satisfied.

When the judgment unit 132 judges that the beverage conditions are not satisfied, the design application unit 133 outputs information indicating that the design cannot be applied. Note that such output may be a display, a buzzer sound, an audio output, or the like.

The server storage unit 21 included in the server 2 stores various kinds of information. Examples of the various types of information include, for example, one or more pieces of design-related information and captured images.

Design-related information is information related to design information that is the basis for the design to be applied to the contained beverage. Design-related information include design information. The design information here is associated with design identifiers. For example, design-related information contains one or more creator identifiers and one or more rights holder identifiers. For example, design-related information includes points. The points are points given to the rights holders identified by the rights holder identifiers. The points may also be referred to as rewards. The points may also be amounts of money.

The server receiving unit 22 receives various kinds of information and instructions. Examples of the various kinds of information and instructions include design information, a design identifier, a captured image, an image viewing instruction, a design viewing instruction, and purchase instructions.

An image viewing instruction is an instruction to view a captured image. For example, the captured image is a photograph, but may also be a video. The captured image may include audio information. For example, the image viewing instruction includes information that specifies the captured image. For example, the information that specifies the captured image is a captured image identifier and a search formula for the captured images. The image viewing instruction may also be an instruction to view all captured images that are managed.

The design viewing instruction is an instruction to view design information. For example, the design viewing instruction includes information that specifies design information. For example, the information that specifies the design information is a design information identifier and a search formula for the design information. The design information viewing instruction may be an instruction to view all the pieces of design information that are managed.

The purchase instruction is an instruction to purchase design information. The purchase instruction is typically associated with the user identifier of the person purchasing the design information. A purchase instruction is typically associated with the design identifier of the design information to be purchased.

The first server receiving unit 221 receives design information from the terminal apparatuses 3. For example, such design information is associated with one or more creator identifiers.

The second server receiving unit 222 receives design identifiers. For example, the second server receiving unit 222 receives design identifiers from the beverage production apparatuses 1. The second server receiving unit 222 may receive design identifiers from the terminal apparatuses 3. The design identifiers here are pieces of information that specify the piece of design information to be transmitted to the beverage production apparatuses 1. The transmission of design information here refers to the transmission of design information for producing a contained beverage to which the design is applied.

The third server receiving unit 223 receives captured images associated with design identifiers. For example, the third server receiving unit 223 receives captured images from the terminal apparatuses 3.

Te fourth server receiving unit 224 receives image viewing instructions corresponding to design identifiers from the terminal apparatuses 3.

The server processing unit 23 performs various kinds of processing. Examples of the various kinds of processing include the processing performed by the first server accumulation unit 231, the processing performed by the first server acquisition unit 232, the processing performed by the second server accumulation unit 233, the processing performed by the second server acquisition unit 234, and the processing performed by the reward processing unit 235.

When the server receiving unit 22 receives a purchase instruction, the server processing unit 23 performs purchase processing to purchase the design information corresponding to the purchase instruction. For example, purchase processing is processing performed to charge the user (purchaser) identified by the user identifier corresponding to the purchase instruction. For example, purchase processing is processing performed to pay a fee for the design information to the user (seller) identified by the rights holder identifier that is paired with the design identifier corresponding to the purchase instruction. For example, purchase processing includes transfer processing performed to change the rights holder identifier paired with the design identifier corresponding to the purchase instruction to the user identifier corresponding to the purchase instruction. Note that transfer processing may be considered to be processing separate from purchase processing.

The first server accumulation unit 231 accumulates the design information received by the first server receiving unit 221 in the server storage unit 21 in a pair with the design identifier that identifies the design information. For example, when the first server receiving unit 221 receives design information, the first server accumulation unit 231 acquires a unique design identifier and accumulates the design information in the server storage unit 21 in a pair with the design identifier. Note that the unique design identifier may be generated by the first server accumulation unit 231 or acquired from the server storage unit 21. There are no restrictions on the method for acquiring unique design identifiers.

The first server acquisition unit 232 acquires, from the server storage unit 21 , the design information identified by the design identifier received by the second server receiving unit 222.

The second server accumulation unit 233 accumulates the captured images received by the third server receiving unit 223 in association with the design identifiers corresponding to the captured images. It is preferable that the second server accumulation unit 233 accumulates the captured images in the server storage unit 21.

The second server acquisition unit 234 acquires one or more captured images paired with the design identifier corresponding to the image viewing instruction received by the fourth server receiving unit 224. For example, the second server acquisition unit 234 acquires one or more captured images from the server storage unit 21.

When the server transmitting unit 24 transmits design information, the reward processing unit 235 performs reward processing to reward the rights holder identified by the rights holder identifier paired with the design information.

For example, reward processing is processing performed to increase a point managed in association with a rights holder identifier, or processing performed to give money to a rights holder identified by a rights holder identifier. For example, the processing performed to give money is processing performed to depositing money into an account identified by bank account information paired with the rights holder identifier.

The server transmitting unit 24 transmits various kinds of information. Examples of the various kinds of information include one or more pieces of design information and one or more captured images.

The first server transmitting unit 241 transmits one or more pieces of design information acquired by the first server acquisition unit 232 to a beverage production apparatus 1. The first server transmitting unit 241 may transmit one or more pieces of design information acquired by the first server acquisition unit 232 to a terminal apparatus 3. It is preferable that such design information is associated with a design identifier.

The second server transmitting unit 242 transmits one or more captured images acquired by the second server acquisition unit 234 to a terminal apparatus 3. It is preferable that such captured images are associated with a design identifier.

The terminal storage unit 31 included in each terminal apparatus 3 stores various kinds of information. Examples of the various kinds of information include a user identifier, design information, and a captured image.

The terminal acceptance unit 32 accepts various kinds of instructions and information. Examples of the various kinds of instructions and information include a beverage production instruction, design information, a captured images acquisition instruction, a captured image, a design viewing instruction, an image viewing instruction, and a purchase instruction.

The captured image acquisition instruction is an instruction to acquire a captured image. For example, the captured image acquisition instruction is an instruction to a camera included in a terminal apparatus 3 to capture an image.

Any input means, such as a touch panel, a keyboard, a mouse, a menu screen, or the like, may be employed to input various kinds of instructions and information.

The terminal processing unit 33 performs various kinds of processing. Examples of the various kinds of processing include processing performed to form received information into data to be displayed. Examples of the various kinds of processing include processing performed to form an accepted instruction or the like into an instruction or the like to be transmitted.

The terminal transmitting unit 34 transmits various kinds of instructions, information, and the likes to a beverage production apparatus 1 or the server 2. Examples of the various kinds of instructions, information, and the likes include a beverage production instruction, design information, a captured image, a design viewing instruction, an image viewing instruction, and a purchase instruction.

The terminal receiving unit 35 receives various kinds of information. Examples of the various kinds of information include one or more pieces of design information and one or more captured images.

The terminal output unit 36 outputs various kinds of information. Examples of the various kinds of information include one or more pieces of design information and one or more captured images.

Here, "output" is a concept that includes, for example, displaying on a display screen, projection using a projector, printing by a printer, the output of a sound, transmission to an external apparatus, accumulation on a recording medium, and delivery of a processing result to another processing apparatus or another program.

It is preferable that the storage unit 11, the condition storage unit 111, the design storage unit 112, the server storage unit 21, and the terminal storage unit 31 are realized using a non-volatile recording medium, but they can be realized using a volatile recording medium.

There are no restrictions on the process in which information is stored in the storage unit 11 or the like. For example, information may be stored in the storage unit 11 or the like via a recording medium, or information transmitted via a communication line or the like may be stored in the storage unit 11 or the like, or information input via an input device may be stored in the storage unit 11 or the like.

It is preferable that the acceptance unit 12 is realized using a wireless or wired communication means, but it may be realized using a broadcast receiving means, a device driver for an input means such as a touch panel or a keyboard, a control software for a menu screen, or the like.

The design receiving unit 121, the instruction receiving unit 122, the server receiving unit 22, the first server receiving unit 221, the second server receiving unit 222, the third server receiving unit 223, the fourth server receiving unit 224, and the terminal receiving unit 35 are typically realized using a wireless or wired communication means, but may be realized using a broadcast reception means.

The processing unit 13, the accumulation unit 131, the judgment unit 132, the design application unit 133, the server processing unit 23, the first server accumulation unit 231, the first server acquisition unit 232, the second server accumulation unit 233, the second server acquisition unit 234, the reward processing unit 235, and the terminal processing unit 33 can typically be realized using a processor, a memory, or the like. The processing procedures performed by the processing unit 13 and so on are typically realized using software, and the software is recorded on a recording medium such as a ROM. However, such processing procedures may be realized using hardware (a dedicated circuit). Note that the processor may be a CPU, an MPU, a GPU, or the like, and there are no restrictions on their type.

The server transmitting unit 24, the first server transmitting unit 241, the second server transmitting unit 242, and the terminal transmitting unit 34 are typically realized using a wireless or wired communication means, but may be realized using a broadcasting means.

The terminal acceptance unit 32 can be realized using a device driver for an input means such as a touch panel or a keyboard, a control software for a menu screen, or the like.

The terminal output unit 36 may be regarded as including or not including an output device such as a display or a speaker. The terminal output unit 36 can be realized using the driver software of the output device, the driver software of the output device and the output device, or the like.

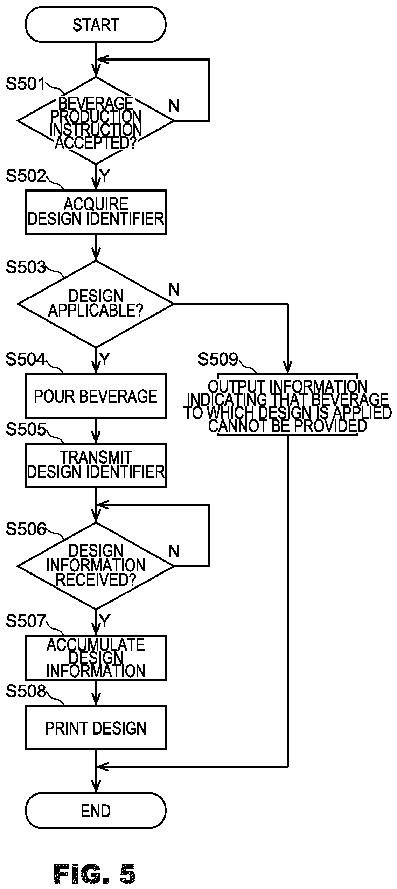

Next, examples of operations of the beverage production system A will be described. First, examples of operations of each beverage production apparatus 1 will be described with reference to the flowchart in FIG. 5.

(Step S501) Te acceptance unit 12 or the instruction receiving unit 122 judges whether or not a beverage production instruction has been accepted. If a beverage production instruction has been accepted, processing proceeds to step S502, and if a beverage production instruction has not been accepted, processing returns to step S501. Note that the "acceptance" here refers to the acceptance of an input from a user (for example, a store clerk) or reception from a terminal apparatus 3.

(Step S502) The judgment unit 132 acquires a design identifier corresponding to the beverage production instruction accepted in step S501.

(Step S503) The judgment unit 132 acquires one or more beverage attribute values paired with the beverage identifier corresponding to the beverage production instruction from the storage unit 11. The judgment unit 132 judges whether or not the one or more beverage attribute values meet the beverage conditions in the condition storage unit 111. If the beverage conditions are met, processing proceeds to step proceeds to step S504, and if the beverage conditions are not met, processing proceeds to step S509. Note that the beverage conditions here are conditions for determining that a design is applicable, but may also be conditions for determining that a design is not applicable.

(Step S504) The processing unit 13 pours into a container the beverage identified by the beverage identifier corresponding to the beverage production instruction accepted in step S501. For example, it is assumed that the container is set in a predetermined location.

(Step S505) The design application unit 133 transmits the design identifier acquired in step S503 to the server 2.

(Step S506) In response to the transmission of the design identifier in step S505, the design application unit 133 judges whether or not the design information identified by the design identifier has been received from the server 2. If the design information has been received, processing proceeds to step S507, and otherwise processing returns to step S506.

(Step S507) The accumulation unit 131 at least temporarily accumulates the design information received in step S506 in the design storage unit 112.

(Step S508) Using the design information received in step S506, the design application unit 133 prints the design on the container into which the beverage has been poured in step S502, or on the beverage. Processing is terminated. Note that the printing of a design here means applying a design to the beverage poured into the container, or printing a design on the container into which the beverage has been poured.

(Step S509) The processing unit 13 outputs information indicating that the beverage to which the design is applied cannot be provided. Processing is terminated. Note that such output may be a display, a buzzer sound, an audio output, or the like. Note that the information indicating that a design cannot be printed is stored in the storage unit 11.

Note that, in the flowchart in FIG. 5, the server 2 may receive a beverage production instruction that contains design information from the terminal apparatus 3, and produces a beverage to which a design that is based on the design information is applied.

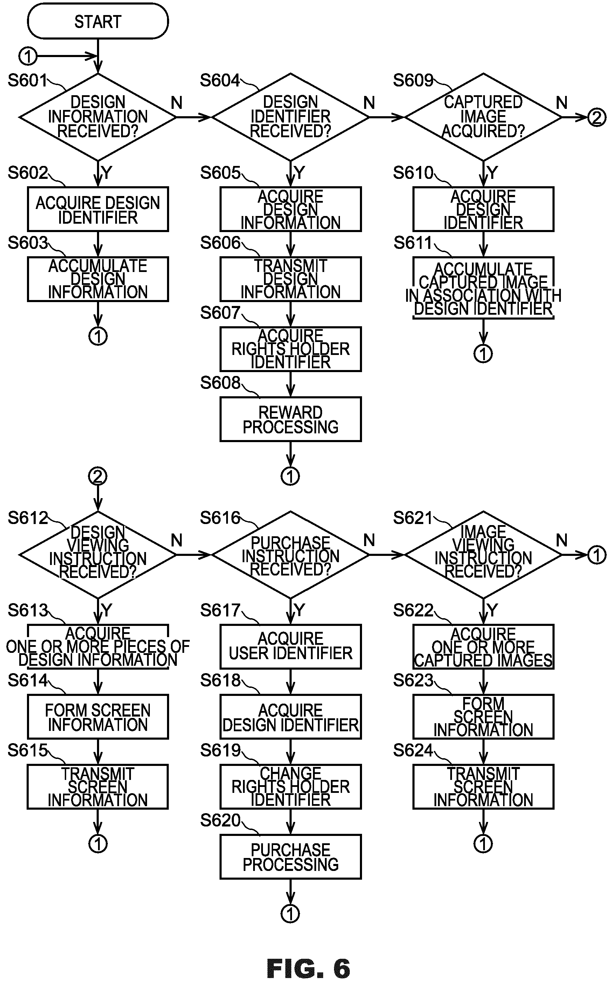

Next, examples of operations of the server 2 will be described with reference to the flowchart in FIG. 6.

(Step S601) The first server receiving unit 221 judges whether or not design information has been received from a terminal apparatus 3. If design information has been received, processing proceeds to step S602, and if design information has not been received, processing proceeds to step S604. Note that the design information here is associated with a user identifier. In addition, the terminal apparatus 3 here is, for example, a terminal belonging to a designer.

(Step S602) The first server accumulation unit 231 acquires a unique design identifier.

(Step S603) The first server accumulation unit 231 accumulates in the server storage unit 21, the design information received in step S601 in association with the user identifier associated with the design information and the design identifier acquired in step S602. Processing returns to step S601. Note that such a user identifier is, for example, a creator identifier or a rights holder identifier.

(Step S604) The second server receiving unit 222 judges whether or not a design identifier has been received from a beverage production apparatus 1 or a terminal apparatus 3. If a design identifier has been received, processing proceeds to step S605, and if a design identifier has not been received, processing proceeds to step S609.

(Step S605) The first server acquisition unit 232 acquires the design information paired with the design identifier received in step S604 from the server storage unit 21.

(Step S606) The first server transmitting unit 241 transmits the design information acquired in step S605 to the apparatus (the beverage production apparatus 1 or the terminal apparatus 3) that has transmitted the design identifier.

(Step S607) The reward processing unit 235 acquires the rights holder identifier paired with the design information that has been transmitted, from the server storage unit 21.

(Step S608) The reward processing unit 235 performs reward processing for the rights holder identified by the rights holder identifier acquired in step S607. Processing returns to step S601.

(Step S609) The third server receiving unit 223 judges whether or not a captured image has been received from a terminal apparatus 3. If a captured image has been received, processing proceeds to step S610, and if a captured image has not been received, processing proceeds to step S612. Note that the captured image here is typically associated with a user identifier and a design identifier.

(Step S610) The second server accumulation unit 233 acquires the design identifier paired with the captured image received in step S609.

(Step S611) The second server accumulation unit 233 accumulates the captured image received in step S609 in the server storage unit 21 in association with the design identifier. Processing returns to step S601. It is preferable that the second server accumulation unit 233 also accumulates the captured image in association with the user identifier.

(Step S612) The server receiving unit 22 judges whether or not a design viewing instruction has been received from a terminal apparatus 3. If a design viewing instruction has been received, processing proceeds to step S613, and if a design viewing instruction has not been received, processing proceeds to step S616.

(Step S613) The server processing unit 23 acquires one or more pieces of design information corresponding to the design viewing instruction received in step S612, from the server storage unit 21.

(Step S614) The server processing unit 23 forms screen information used to view the one or more pieces of design information acquired in step S613. Note that the screen information is information for forming a screen. The screen information is described in, for example, XML, HTML, or the like, but there are no restrictions on the means for realizing it.

(Step S615) The server transmitting unit 24 transmits the screen information formed in step S614 to the terminal apparatus 3 from which the design viewing instruction has been transmitted. Processing returns to step S601.

(Step S616) The server receiving unit 22 judges whether or not a purchase instruction has been received from a terminal apparatus 3. If a purchase instruction has been received, processing proceeds to step S617, and if a purchase instruction has not been received, processing proceeds to step S621. Note that the purchase instruction is typically associated with a user identifier and a design identifier.

(Step S617) The server processing unit 23 acquires the user identifier paired with the purchase instruction.

(Step S618) The server processing unit 23 acquires the design identifier corresponding to the purchase instruction.

(Step S619) The server processing unit 23 changes the rights holder identifier paired with the design identifier acquired in step S618 to the user identifier acquired in step S617. Through such processing, the owner of the design information has been changed. Note that changing the owner of the design information means, for example, transferring the copyright of the design information or making the copyright of the design information co-owned.

(Step S620) The server processing unit 23 performs purchase processing. Processing returns to step S601. Note that purchase processing is processing in which the user identified by the user identifier paired with the purchase instruction pays the purchase cost of the design information to the user identified by the original rights holder identifier paired with the design information.

(Step S621) The fourth server receiving unit 224 judges whether or not an image viewing instruction has been received from a terminal apparatus 3. If an image viewing instruction has been received, processing proceeds to step S622, and if an image viewing instruction has not been received, processing returns to step S601.

(Step S622) The server processing unit 23 acquires one or more captured images corresponding to the image viewing instruction received in step S612, from the server storage unit 21.

(Step S623) The server processing unit 23 forms screen information used to view the one or more captured images acquired in step S622.

(Step S624) The server transmitting unit 24 transmits the screen information formed in step S623 to the terminal apparatus 3 from which the image viewing instruction has been transmitted. Processing returns to step S601.

Note that, in the flowchart shown in FIG. 6, processing is terminated when power is turned off or an interruption is made to terminate the processing.

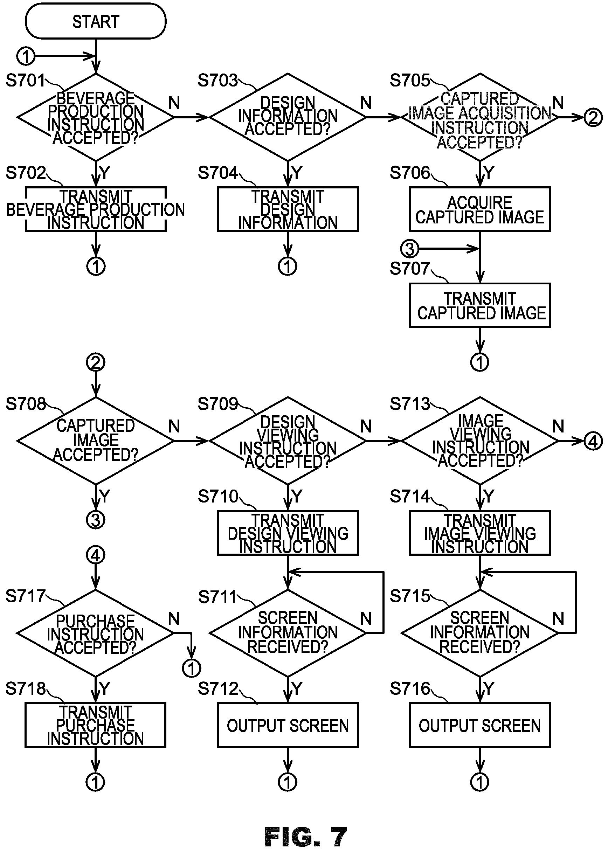

Next, examples of operations of each terminal apparatus 3 will be described with reference to the flowchart in FIG. 7.

(Step S701) The terminal acceptance unit 32 judges whether or not a beverage production instruction has been accepted. If a beverage production instruction has been accepted, processing proceeds to step S702, and if a beverage production instruction has not been accepted, processing proceeds to step S703.

(Step S702) The terminal processing unit 33 forms a beverage production instruction to be transmitted. The terminal transmitting unit 34 transmits the beverage production instruction to a beverage production apparatus 1. Processing returns to step S701. Note that the beverage production instruction contains, for example, a design identifier and a beverage identifier. For example, the beverage production instruction contain design information instead of the design identifier.

(Step S703) The terminal acceptance unit 32 judges whether or not design information has been accepted. If design information has been accepted, processing proceeds to step S704, and if design information has not been accepted, processing proceeds to step S705.

(Step S704) The terminal processing unit 33 acquires a user identifier from the terminal storage unit 31. Next, the terminal processing unit 33 forms design information to be transmitted associated with the user identifier. The terminal transmitting unit 34 transmits the design information to the beverage production apparatus 1 in association with the user identifier. Processing returns to step S701.

(Step S705) The terminal acceptance unit 32 judges whether or not a captured image acquisition instruction has been accepted. If a captured image acquisition instruction has been accepted, processing proceeds to step S706, and if a captured image acquisition instruction has not been accepted, processing proceeds to step S708. It is assumed that the captured image acquisition instruction is associated with a design identifier.

(Step S706) The terminal processing unit 33 acquires a captured image. The terminal processing unit 33 acquires a user identifier from the terminal storage unit 31. The terminal processing unit 33 forms a captured image associated with the user identifier and the design identifier.

(Step S707) The terminal transmitting unit 34 transmits the captured image to the server 2 in association with the user identifier and the design identifier. Processing returns to step S701.

Note that, through the processing in steps S705 to S707, in response to an image being captured, the captured image associated with the design identifier is transmitted to the server 2.

(Step S708) The terminal acceptance unit 32 judges whether or not a captured image has been accepted. If a captured image has been accepted, processing proceeds to step S707, and if a captured image has not been accepted, processing proceeds to step S7009. Note that the captured image here is associated with a design identifier. The captured image here is also associated with a user identifier, for example.

(Step S709) The terminal acceptance unit 32 judges whether or not a design viewing instruction has been accepted. If a design viewing instruction has been accepted, processing proceeds to step S710, and if a design viewing instruction has not been accepted, processing proceeds to step S713.

(Step S710) The terminal processing unit 33 forms a design viewing instruction to be transmitted. The terminal transmitting unit 34 transmits the design viewing instruction to the server 2.

(Step S711) The terminal receiving unit 35 judges whether or not screen information has been received. If screen information has been received, processing proceeds to step S712, and otherwise processing returns to step S711.

(Step S712) The terminal processing unit 33 forms a screen to be output, using the received screen information. The terminal output unit 36 outputs the screen. Processing returns to step S701. Note that the screen is, for example, a screen showing a list of pieces of design information.

(Step S713) The terminal acceptance unit 32 judges whether or not an image viewing instruction has been accepted. If an image viewing instruction has been accepted, processing proceeds to step S714, and if an image viewing instruction has not been accepted, processing proceeds to step S717.

(Step S714) The terminal processing unit 33 forms an image viewing instruction to be transmitted. The terminal transmitting unit 34 transmits the image viewing instruction to the server 2.

(Step S715) The terminal receiving unit 35 judges whether or not screen information has been received. If screen information has been received, processing proceeds to step S715, and otherwise processing returns to step S714.

(Step S716) The terminal processing unit 33 forms a screen to be output, using the received screen information. The terminal output unit 36 outputs the screen. Processing returns to step S701. Note that the screen is, for example, a screen showing a list of captured images.

(Step S717) The terminal acceptance unit 32 judges whether or not a purchase instruction has been accepted. If a purchase instruction has been accepted processing proceeds to step S716, and if a purchase instruction has not been accepted, processing returns to step S701.

(Step S718) The terminal processing unit 33 forms a purchase instruction to be transmitted. The terminal transmitting unit 34 transmits the purchase instruction to the server 2. Processing returns to step S701.

Note that, in the flowchart shown in FIG. 7, processing is terminated when power is turned off or an interruption is made to terminate the processing.

Hereinafter, specific examples of operations of the beverage production system A according to the present embodiment will be described.

It is assumed that a beverage production apparatus 1 is installed in a store such as a cafe or restaurant that provides beverages to customers. It is assumed that the beverage production apparatus 1 is an apparatus that pours a beverage into a container and applies a design to the surface of the beverage or in the beverage (here, for example, coffee) poured into the container.

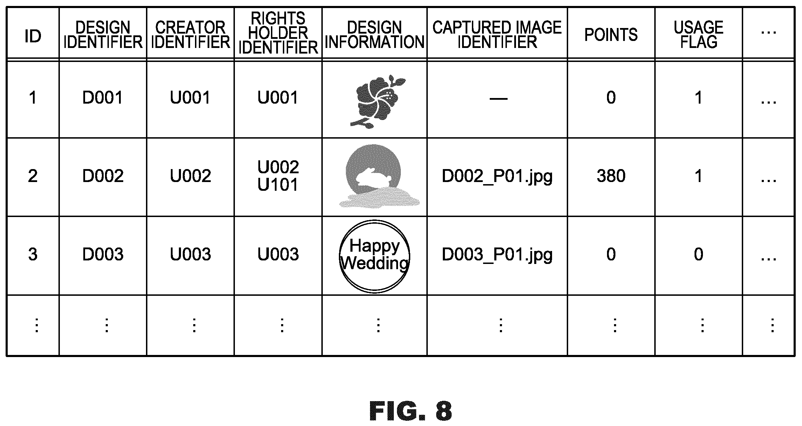

It is also assumed that a design management table having the structure shown in FIG. 8 is stored in the server storage unit 21 of the server 2. The design management table is a table for managing one or more pieces of design-related information. The design management table manages one or more records each containing "ID", "design identifier", "creator identifier", "rights holder identifier", "design information", "captured image identifier", "points", and "usage flag". The "ID" is information that identifies a record. The "design information" here is, for example, a JPEG image, but there are not restrictions on the data structure and the like. The "captured image identifier" is the file name of the captured image. The "points" are points given in response to the use of the design information by others. It is assumed that the "points" are a reward given to a rights holder identified by a rights holder identifier. It is also assumed that if there are multiple rights holder identifiers, rewards will be distributed to the rights holder. The "usage flag" is a flag that indicates whether or not others may use the design information. It is assumed that "usage flag = 1" indicates that the information can be used by others, and "usage flag = 0" indicates that the information cannot be used by others.

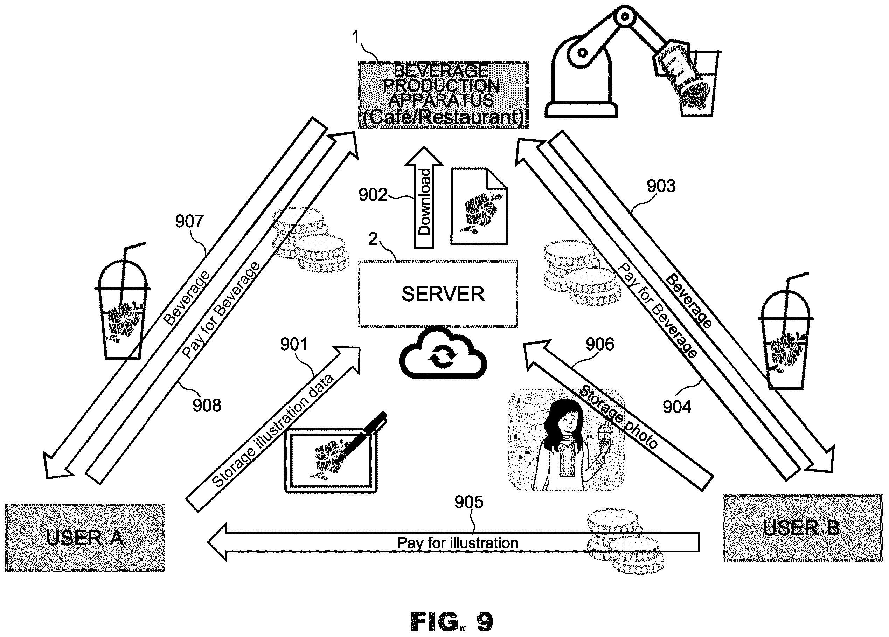

In this situation, three specific examples of the processing performed by the beverage production system A will be described using the conceptual diagram for the processing performed by the beverage production system A in FIG. 9. Specific Example 1 is a case where a user orders a beverage using design information created by another person. Specific Example 2 is a case where a user orders a beverage using design information created by the user. Specific Example 3 is a case where information regarding the rights holder of design information that is managed is changed.

### Specific Example 1

It is assumed that a user A, a designer identified by a user identifier "U001", has transmitted design information created using the terminal apparatus 3 of the user A, from terminal apparatus 3 to the server 2, in association with the user identifier "U001" (see 901 in Figure 9).

Next, the first server receiving unit 221 of the server 2 receives the design information from the terminal apparatus 3. Next, the first server accumulation unit 231 acquires the received design information. Next, the first server accumulation unit 231 generates a unique design identifier "D001". Next, the first server accumulation unit 231 acquires the user identifier "U001" paired with the received design information as a creator identifier "U001" and a rights holder identifier "U001". Next, the first server accumulation unit 231 acquires the initial value "NULL" of the captured image identifier and the initial value "0" of the points. Thereafter, the first server accumulation unit 231 forms design information to be accumulated. Next, the first server accumulation unit 231 accumulates the design information in the design management table. This design information is the record with "ID=1".

Next, it is assumed that a customer (user B) of the store in which the beverage production apparatus 1 is installed inputs a design viewing instruction to the terminal apparatus 3 of the user B. The terminal apparatus 3 accepts the design viewing instruction and transmits the design viewing instruction to the server 2.

Next, the server receiving unit 22 of the server 2 receives the design viewing instruction from the terminal apparatus 3 of the user B. Next, the server processing unit 23 acquires, from the server management table (FIG. 8), one or more pieces of design information corresponding to the received design viewing instruction and paired with "usage flag = 1". Next, the server processing unit 23 forms screen information for creating a list of the acquired one or more pieces of design information. Next, the server transmitting unit 24 transmits the formed screen information to the terminal apparatus 3 from which the design viewing instruction has been transmitted.

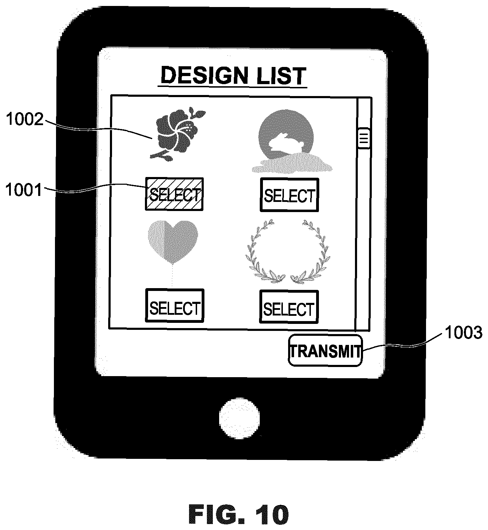

Next, the terminal apparatus 3 receives the screen information, forms a screen, and outputs it. An example of such a screen is shown in FIG. 10.

Next, it is assumed that the customer presses a button 1001 in FIG. 10 to select design information 1002. Next, it is assumed that the customer presses a transmission button 1003. As a result, the terminal acceptance unit 32 of the terminal apparatus 3 accepts a beverage production instruction including the design identifier "D001". Next, the terminal processing unit 33 forms a beverage production instruction to be transmitted. The terminal transmitting unit 34 transmits the beverage production instruction to the beverage production apparatus 1. Note that the beverage production instruction includes the design identifier "D001".

Next, the instruction receiving unit 122 of the beverage production apparatus 1 receives the beverage production instruction. Next, in response to the beverage production instruction received, the processing unit 13 pours the beverage (here, coffee) into a container that is installed in advance at a predetermined position.

Next, the design application unit 133 of the beverage production apparatus 1 transmits the design identifier "D001" to the server 2.

Next, the second server receiving unit 222 of the server 2 receives the design identifier "D001" from the beverage production apparatus 1. Next, the first server acquisition unit 232 acquires the design information paired with the received design identifier from the design management table (FIG. 8). Next, the first server transmitting unit 241 transmits the acquired design information (the design information with "ID = 1" in FIG. 8) to the beverage production apparatus 1 (902 in FIG. 9).

Next, the reward processing unit 235 of the server 2 acquires the rights holder identifier "U001" paired with the transmitted design information, from the server storage unit 21. Next, the reward processing unit 235 performs reward processing for the user identified by the rights holder identifier "U001". Here, the reward processing unit 235 adds, for example, fixed points (for example, "10") for one use of the design information to the attribute value "points" with "ID = 1" in the design management table.

Next, in response to the transmission of the design identifier "D001", the design application unit 133 of the beverage production apparatus 1 receives the design information identified by the design identifier from the server 2. Next, the accumulation unit 131 temporarily accumulates the received design information in the design storage unit 112. Next, using the received design information, the design application unit 133 prints a design (1002 in FIG. 10) on the coffee in the container.

Through the above processing, the coffee with the design is provided to the customer (903). The customer pays the cafe for the coffee with the design

(904). This payment usually includes the points paid to the rights holder of the design information (corresponding to 905 in FIG. 9).

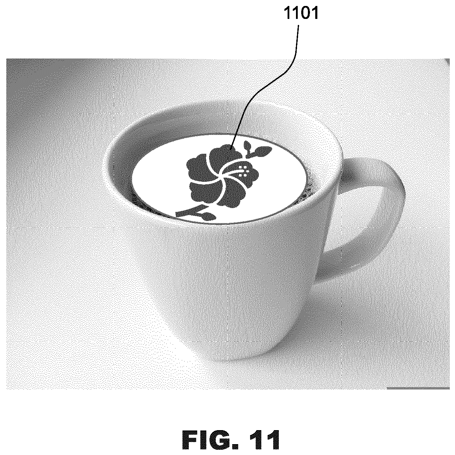

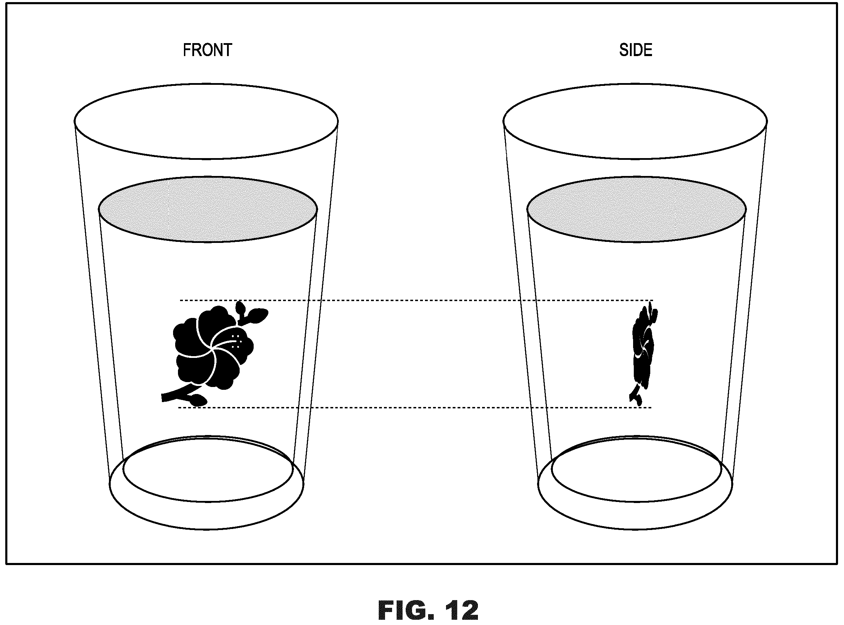

Next, it is assumed that a user B points the camera of the terminal apparatus 3 at the provided coffee and inputs a captured image acquisition instruction. In response, the terminal acceptance unit 32 of the terminal apparatus 3 accepts the captured image acquisition instruction. Next, the camera of the terminal processing unit 33 acquires the captured image. next, the terminal processing unit 33 acquires the user identifier from the terminal storage unit 31. The terminal processing unit 33 forms a captured image associated with the user identifier. Next, the terminal transmitting unit 34 transmits the captured image to the server 2 in association with the user identifier and the design identifier "D001" (906). An examples of the transmitted captured image is shown in FIG. 11. In FIG. 11, a design 1101 that is based on design information is printed on the surface of a beverage. Note that the design may be drawn into the beverage. An image of the design being drawn into the beverage is shown in FIG. 12. FIG. 12 shows front and side views of the design.

Next, the third server receiving unit 223 of the server 2 receives, from the terminal apparatus 3 of the user B, the captured image associated with the user identifier and the design identifier "D001". Next, the second server accumulation unit 233 acquires the design identifier "D001" paired with the captured image. Next, the second server accumulation unit 233 accumulates the received captured image in the design management table (FIG. 8) in association with the design identifier "D001". Note that accumulating the captured image in the design management table here means accumulating a file of the captured image in the server storage unit 21 and accumulating the identifier (captured image identifier) of the file in the design management table.

In the above specific example, the terminal apparatus 3 may receive design information selected on the terminal apparatus 3 of the user B from the server 2, and transmit beverage production instruction including the design information to the beverage production apparatus 1. In such a case, the beverage production apparatus 1 can produce a beverage using the design information received from the terminal apparatus 3 without communicating with the server 2.

### Specific Example 2

It is assumed that the user A designates the design information that has been designed by the user A and identified by "D001" and the beverage identifier that identifies the beverage, and inputs a beverage production instruction to the terminal apparatus 3. In response, the terminal acceptance unit 32 accepts the beverage production instruction. Next, the terminal processing unit 33 acquires the design information identified by "D001" from the terminal storage unit 31, and forms a beverage production instruction containing the design information and the beverage identifier. Next, the terminal transmitting unit 34 transmits the beverage production instruction to the beverage production apparatus 1.

Next, the instruction receiving unit 122 of the beverage production apparatus 1 receives the beverage production instruction containing the design information. Next, the processing unit 13 pours the beverage identified by the beverage identifier corresponding to the beverage production instruction into a container. The container is set in a predetermined location.

Next, using the design information identified by "D001", the design application unit 133 applies the design to the beverage in the container. As a result, a beverage in which the design is applied on the surface of or in the beverage is produced.

Through the above processing, the user A can acquire a beverage with the design designed by the user A (907). The user pays the store the price for the beverage (908). On the other hand, the user A does not pay any price for the use of the design information created by the user A created and to which the user A holds the rights.

### Specific Example 3

It is assumed that a user X (user identifier "U101") who has seen the design information identified by "D002" wishes to purchase, for example, a 1/2 share, and inputs a purchase instruction "purchase, design identifier = D002, share = 1/2" into the terminal apparatus 3. Note that the purchase instruction here includes the design identifier and the share information.

Next, the terminal acceptance unit 32 of the terminal apparatus 3 accepts the purchase instruction "purchase, design identifier = D002, share = 1/2". Next, the terminal processing unit 33 forms a purchase instruction "purchase, design identifier = D002, share = 1/2, user identifier = U101" to be transmitted. The terminal transmitting unit 34 transmits the purchase instruction to the server 2.

Next, the server receiving unit 22 of the server 2 receives the purchase instruction "purchase, design identifier = D002, share = 1/2, user identifier = U101" from the terminal apparatus 3 of the user X. Net, the server processing unit 23 acquires the user identifier "U101" included in the purchase instruction. The server processing unit 23 also acquires the design identifier "D002" included in the purchase instruction. Next, the server processing unit 23 adds the user identifier "U101" to the rights holder identifier paired with the design identifier "D002" based on "share = 1/2". Through the above processing, the user identified by the user identifier "U101" has been added to the user identified by the creator "U002" as the rights holder of the design information.

Next, the server processing unit 23 performs the following purchase processing. That is to say, the server processing unit 23 performs processing through which the user identified by the user identifier "U101" (user X) pays the user identified by "U002" (user Y) for the purchase of the rights for the 1/2 share. Such processing is, for example, the transfer of points from the user X to the user Y, or the transfer of money from the user X's bank account to the user Y's bank account. Note that the processing performed to transfer money is a well-known technique, and therefore a detailed description thereof will be omitted.

As described above, according to the present embodiment, the beverage production apparatus 1 can produce a contained beverage to which a design is applied using design information transmitted from an external source.

According to the present embodiment, the beverage production apparatus 1 can receive design information that is based on the user's wishes from the server 2 or the terminal apparatus 3, and produce a contained beverage to which a design is applied using the design information.

According to the present embodiment, the beverage production apparatus 1 can produce a contained beverage in which a design is applied within the beverage using design information transmitted from an external source. Note that "within the beverage" refers to, for example, the surface of the beverage or inside the beverage liquid.

According to the present embodiment, the beverage production apparatus 1 can produce a contained beverage in which a design is applied within the beverage using design information transmitted from an external source.

According to the present embodiment, the beverage production apparatus 1 can apply the design only to appropriate beverages. That is to say, when there are beverages that are not capable of incorporating a design or that do not incorporate a design and beverages that are capable of incorporating a design, even if an instruction to apply a design (beverage production instruction) is accepted for a beverage that is not capable of incorporating a design or that does not incorporate a design, the beverage production apparatus 1 will not perform processing to apply the design.

According to the present embodiment, in response to a beverage production instruction to apply a design to a beverage that is not capable of incorporating a design, the beverage production apparatus 1 is capable of judging that the design cannot be applied and output information indicating that. As a result, for example, it is possible to prevent a beverage that does not meet the user's intention from being produced, and to prevent the beverage from being wasted.

According to the present embodiment, the server 2 can assist in producing a contained beverage to which a design is applied using design information transmitted from an external source.

According to the present embodiment, the server 2 is capable of rewarding the rights holder of the design information used.

According to the present embodiment, the server 2 is capable of managing captured images of contained beverages using design information in association with the design information.

Note that processing according to the present embodiment may be realized using software. This software may be distributed through software downloading or the like. Also, this software may be recorded on a recording medium such as a CD-ROM and distributed. Note that the same applies to the other embodiments in the present description. Note that the software that realizes the beverage production apparatus 1 according to the present embodiment is the program described below. That is to say, this program is a program for enabling a computer to function as: a design receiving unit configured to receive design information transmitted from a terminal apparatus; and a design application unit configured to apply a design to a contained beverage, using the design information.

Software that realizes the server 2 is the program described below. That is to say, this program is a program for enabling a computer that is capable of accessing a server storage unit in which design-related information that contains design information is stored in association with a design identifier that identifies design information that is a basis for a design to be applied to a contained beverage, to function as: a first server receiving unit configured to receive design information from a terminal apparatus; a first server accumulation unit configured to accumulate the design information in the server storage unit in a pair with a design identifier that identifies the design information; a second server receiving unit configured to receive a design identifier that identifies design information to be transmitted to a beverage production apparatus; a first server acquisition unit configured to acquire design information that is identified by the design identifier received by the second server receiving unit, from the server storage unit; and a first server transmitting unit configured to transmit the design information acquired by the first server acquisition unit.

### Second Embodiment

The present embodiment differs from the first embodiment in that the server accumulates design information on the blockchain in association with NFTs.

A beverage production system B according to the present embodiment includes one or more beverage production apparatuses 1, a server 4, and one or more terminal apparatuses 3.

The server 4 is an apparatus that manages design information and provides design information to the beverage production apparatuses 1 or the terminal apparatuses 3. The server 4 manages, for example, design information received from the terminal apparatuses 3. The server 4 also manages, for example, captured images received from the terminal apparatuses 3. The server 4 is, for example, a cloud server or an ASP server, and there are no restrictions on the type of the server 4.

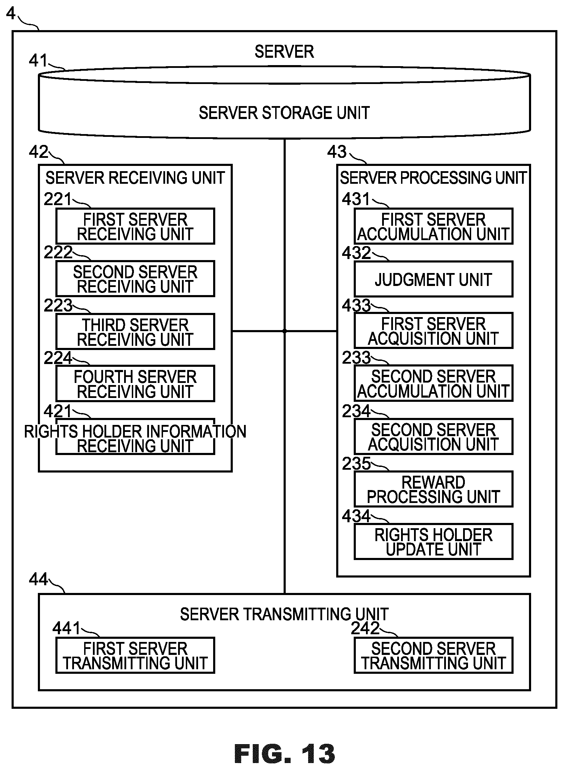

FIG. 13 is a block diagram of the server 4. The server 4 includes a server storage unit 41, a server receiving unit 42, a server processing unit 43, and a server transmitting unit 44. The server receiving unit 42 includes a first server receiving unit 221, a second server receiving unit 222, a third server receiving unit 223, a fourth server receiving unit 224, and a rights holder information receiving unit 421. The server processing unit 43 includes a first server accumulation unit 431, a judgment unit 432, a first server acquisition unit 433, a second server accumulation unit 233, a second server acquisition unit 234, a reward processing unit 235, and a rights holder update unit 434. The server transmitting unit 44 includes a first server transmitting unit 441 and a second server transmitting unit 242.

The server storage unit 41 stores various kinds of information. Examples of the various kinds of information include captured images. One or more pieces of design-related information are typically accumulated on the blockchain, but may also be accumulated in the server storage unit 41.

The server receiving unit 42 receives various kinds of information and instructions. The server receiving unit 42 receives various kinds of information and instructions typically from a terminal apparatus 2. Examples of the various kinds of information and instructions include rights holder information, which will be described later.

The rights holder information receiving unit 421 receives rights holder information. Rights holder information is information regarding a new rights holder of design information. Rights holder information is associated with a design identifier. For example, rights holder information contains a user identifier. It is preferable that rights holder information contains rights specifying information. Rights specifying information is information that specifies the content of rights. Examples of rights specifying information include "usage rights", "number of uses", and "modification rights". The rights holder information receiving unit 421 may receive a purchase instruction that includes rights holder information. Note that design information may be transferred free of charge.

The server processing unit 43 performs various kinds of processing. Examples of the various kinds of processing include the processing performed by the first server accumulation unit 431, the processing performed by the judgment unit 432, the processing performed by the first server acquisition unit 433, the processing performed by the second server accumulation unit 233, the processing performed by the second server acquisition unit 234, and the processing performed by the reward processing unit 235.

For example, When the server receiving unit 22 receives a purchase instruction, the server processing unit 43 performs purchase processing to purchase the design information corresponding to the purchase instruction. For example, purchase processing is processing performed to charge the user (purchaser) identified by the user identifier corresponding to the purchase instruction. For example, purchase processing is processing performed to pay a fee for the design information to the user (seller) identified by the rights holder identifier that is paired with the design identifier corresponding to the purchase instruction.

The first server accumulation unit 431 accumulates the design information received by the first server receiving unit 221 in a pair with the design identifier that identifies the design information and in association with an NFT. It is preferable that the first server accumulation unit 431 accumulates the design information on the blockchain, but it may also accumulate the design information in another storage area.

It is preferable that the first server accumulation unit 431 judges whether or not one or more design attribute values corresponding to the design information received by the first server receiving unit 221 satisfy NFT conditions, and if the NFT conditions are satisfied, the first server accumulation unit 431 accumulates the design information in association with an NFT, and if the NFT conditions are not satisfied, the first server accumulation unit 431 does not accumulate the design information in association with an NFT. Accumulating in association with an NFT typically means accumulating on the blockchain. When design information is not to be accumulated in association with an NFT, the first server accumulation unit 431 typically accumulates design information in the server storage unit 41.

The NFT conditions are conditions for judging whether or not to accumulate design information in association with an NFT. The NFT conditions are conditions related to one or more design attribute values.

The design attribute values are attribute values of design information. Examples of design attribute values include a user identifier that identifies the rights holder of the design information, type information that indicates the type of the design information, a flag corresponding to the design information, the size of the design information, and a data type.

Examples of NFT conditions include a condition that the user identifier, which is a design attribute value, is a predetermined user identifier. Note that the one or more predetermined user identifiers are stored in the server storage unit 41, for example. Such a user identifier is, for example, a user identifier of a user who is a famous person, or a user identifier that identifies a particular company. Examples of NFT conditions include a condition that type information, which is a design attribute value, is predetermined type information. Examples of NFT conditions include a condition that the user identifier, which is a design attribute value, is a predetermined user identifier. Such a flag is, for example, a flag indicating that the information will be accumulated on the blockchain, or a flag indicating that the information is design information subject to rights such as design rights.

For example, when the first server receiving unit 221 receives design information, the first server accumulation unit 431 acquires a unique design identifier and accumulates the design information on the blockchain in a pair with the design identifier. Note that the unique design identifier may be generated by the first server accumulation unit 431 or acquired from the server storage unit 41. There are no restrictions on the method for acquiring unique design identifiers.

The judgment unit 432 judges whether or not a usage condition is satisfied. For example, the judgment unit 432 judges whether or not one or more rights holder identifiers paired with the design identifier received by the second server receiving unit 222 and the user identifier associated with the design identifier are in a predetermined relationship, and acquires a judgment result. The predetermined relationship is, for example, a matching relationship, or a relationship in which the user identifier is included in two or more rights holder identifiers. Note that the predetermined relationship is the usage condition here. If there is a predetermined relationship, the judgement result is "available", and if there is no predetermined relationship, the judgment result is "unavailable". "Available" indicates that the design information is available, and "unavailable" indicates that the design information is not available.

The usage condition is a condition for judging whether or not the design information is available. The usage condition is, for example, a condition regarding the relationship between the above-mentioned rights holder identifier and the user identifier of the user who wishes to use the design information, or a condition regarding the upper limit of the number of times the user can use the design information.

The first server acquisition unit 433 acquires the design information that is identified by the design identifier received by the second server receiving unit 222, from the storage unit. The storage unit here is typically the blockchain, but may also be the server storage unit 41. Note that the first server acquisition unit 233 acquires design information from a storage unit, which is the server storage unit 21.

It is preferable that the first server acquisition unit 433 acquires the design information identified by the design identifier received by the second server receiving unit 222 from the blockchain or the server storage unit 41 only when the judgment unit 432 acquires a judgment result indicating "available".

The rights holder update unit 434 adds a rights holder identifier that identifies a new rights holder to the design-related information paired with the design identifier corresponding to the rights holder information received by the rights holder information receiving unit 421. For example, the rights holder update unit 434 accumulates the received rights holder information on the blockchain. The destination where the rights holder update unit 434 accumulates the rights holder information does not have to be the blockchain.

The server transmitting unit 44 transmits various kinds of information. Examples of the various kinds of information include one or more pieces of design information and one or more captured images.

It is preferable that the first server transmitting unit 441 transmits one or more pieces of design information acquired by the first server acquisition unit 433 to the beverage production apparatus 1 only when the judgment unit 432 acquires a judgment result that indicates "available". The first server transmitting unit 441 may also transmit one or more pieces of design information acquired by the first server acquisition unit 433 to the terminal apparatus 3 only when the judgment unit 432 acquires a judgment result that indicates "available". It is preferable that such design information is associated with a design identifier.

It is preferable that the server storage unit 41 is realized using a non-volatile recording medium, but it can be realized using a volatile recording medium.

There are no restrictions on the process in which information is stored in the storage unit 41. For example, information may be stored in the server storage unit 41 via a recording medium, or information transmitted via a communication line or the like may be stored in the server storage unit 41, or information input via an input device may be stored in the server storage unit 41.

The server receiving unit 42 and the rights holder information receiving unit 421 are typically realized using a wireless or wired communication means, but may be realized using a broadcast reception means.

The server processing unit 43, the first server accumulation unit 431, the judgment unit 432, the first server acquisition unit 433, and the rights holder update unit 434 can typically be realized using a processor, a memory, or the like. The processing procedures performed by the processing unit 13 and so on are typically realized using software, and the software is recorded on a recording medium such as a ROM. However, such processing procedures may be realized using hardware (a dedicated circuit). Note that the processor may be a CPU, an MPU, a GPU, or the like, and there are no restrictions on their type.

The server transmitting unit 44 and the first server transmitting unit 441 are typically realized using a wireless or wired communication means, but may be realized using a broadcasting means.

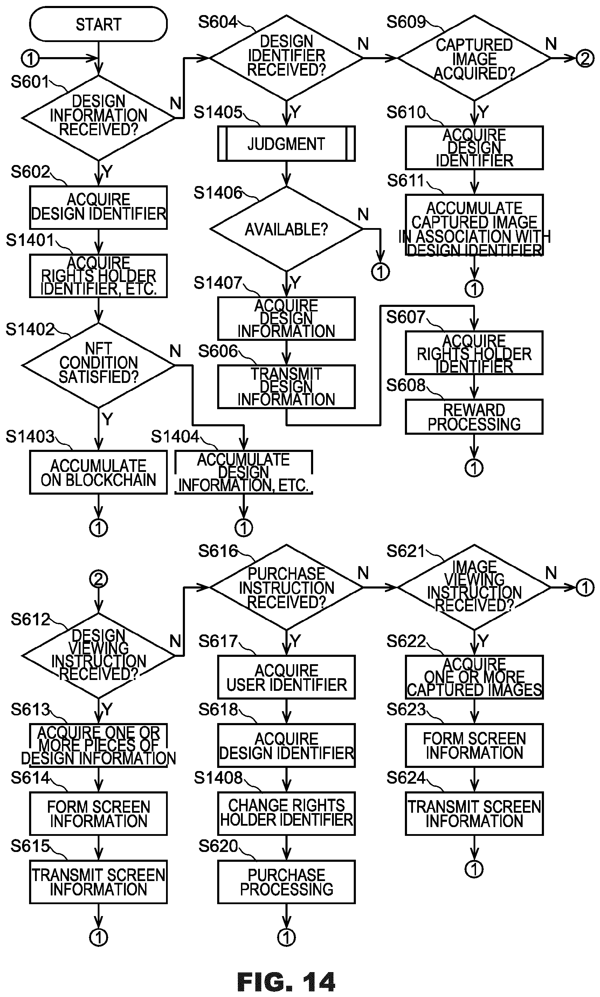

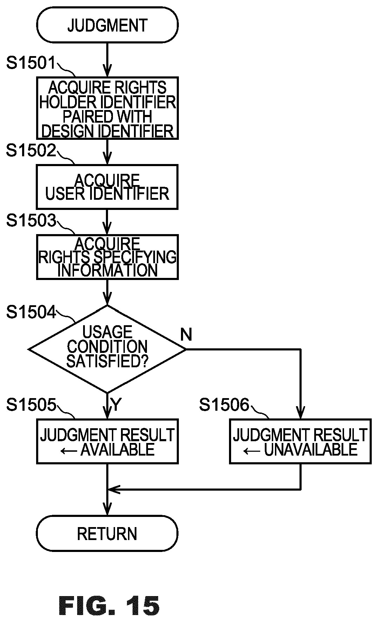

Next, examples of operations of the server 4 will be described with reference to the flowchart in FIG. 14. In the flowchart in FIG. 14, the descriptions of the same steps as those in the flowchart in FIG. 6 will be omitted.
(Step S1401) The first server accumulation unit 431 acquires the user identifier associated with the design information received by the first server receiving unit 221 in step S601. Note that the first server accumulation unit 431 acquires the rights holder identifier that is based on such a user identifier. The rights holder identifier based on the user identifier may be the user identifier. In addition, the first server accumulation unit 431 may acquire rights specifying information that identifies the rights held by the rights holder. The rights specifying information here is typically information regarding the maximum rights given to the rights holder. The rights specifying information here may be, for example, any disposition rights with respect to the design information. The rights specifying information here is, for example, the right to use the design information an unlimited number of times, the right to modify the design information, or the right to transfer the design information to another company.
(Step S1402) The first server accumulation unit 431 acquires one or more design attribute values associated with the received design information. The first server accumulation unit 431 judges whether or not the one or more design design attribute values satisfy NFT conditions. If the NFT conditions are satisfied, processing proceeds to step S1403, and otherwise processing proceeds to step S1404. Note that the NFT conditions are stored in, for example, the server storage unit 41.
(Step S1403) The first server accumulation unit 431 acquires the design information received by the first server receiving unit 221 in step S601 on the blockchain in association with the rights holder identifier and so on. Processing returns to step S601. Note that the design information is typically associated with an NFT. The rights holder identifier and so on is, for example, only the rights holder identifier, or the rights holder identifier and the rights specifying information.
(Step S1404) The first server accumulation unit 431 accumulates the design information in the server storage unit 41 in association with the rights holder identifier. That is to say, here, the first server accumulation unit 431 does not accumulate the design information in association with an NFT. Processing returns to step S601.
(Step S1405) The judgment unit 432 performs judgment processing. An example of determination processing will be described with reference to the flowchart in FIG. 15.
(Step S1406) If the result of the judgment processing in step S1405 is "available", processing proceeds to step S1407, and if the result is "unavailable", processing returns to step S601. Note that if the design identifier is "unavailable", an error message may be transmitted to the terminal apparatus 2 from which the design identifier has been transmitted.
(Step S1407) The server processing unit 43 changes the rights holder identifier paired with the design identifier corresponding to the received purchase instruction to the user identifier corresponding to the received purchase instruction.

Next, an example of the judgment processing in step S1405 will be described with reference to the flowchart in FIG. 15.
(Step S1501) The judgment unit 432 acquires one or more rights holder identifiers paired with the received design identifier.
(Step S1502) The judgment unit 432 acquires the received user identifier.
(Step S1503) The judgment unit 432 acquires the rights specifying information paired with each of the one or more rights holder identifiers acquired in step S1501.
(Step S1504) The judgment unit 432 judges whether or not a usage condition is satisfied. If the usage condition is satisfied, processing proceeds to step S1505, and otherwise processing proceeds to step S1506.

Note that the usage condition is, for example, a condition that the user identifier acquired in step S1502 is included in each of the one or more rights holder identifiers acquired in step S1501. The usage condition is, for example, a condition that information indicating that the user identifier acquired in step S1502 is included in each of the one or more rights holder identifiers acquired in step S1501, and that the rights specifying information paired with the rights holder identifier that matches the user identifier is information indicating that the next usage (transmission) of the design information is allowed.
(Step S1505) The judgment unit 432 assigns "available" to a variable "judgment result". Processing returns to higher level processing.
(Step S1506) The judgment unit 432 assigns "unavailable" to the variable "judgment result". Processing returns to higher level processing.

As described above, according to the present embodiment, the server 4 can associate design information with an NFT and accumulates it on the blockchain.

According to the present embodiment, the server 4 can accumulate design information on the blockchain in association with an NFT only when the design information satisfies an NFT condition. As a result, it is possible to realize appropriate design information protection according to the design information.

According to the present embodiment, the server 4 can assist in producing a contained beverage to which a design is applied using design information transmitted from an external source.

According to the present embodiment, the server 4 is capable of rewarding the rights holder of the design information used.

Furthermore, the software that realizes the server 4 is the program described below. That is to say, this program is a program that enables a computer to function as: a first server receiving unit configured to receive design information from a terminal apparatus; a first server accumulation unit configured to accumulate the design information in the server storage unit in a pair with a design identifier that identifies the design information; a second server receiving unit configured to receive a design identifier that identifies design information transmitted to a beverage production apparatus; a first server acquisition unit configured to acquire design information that is identified by the design identifier received by the second server receiving unit, from a storage unit in which design-related information including design information is stored, in association with a design identifier that identifies design information that is a basis for a design to be applied to a contained beverage; and a first server transmitting unit configured to transmit the design information acquired by the first server acquisition unit.

It is preferable that the above program further enables a computer to function as: a rights holder information receiving unit configured to receive rights holder information regarding a new rights holder of design information, corresponding to a design identifier; and a rights holder update unit configured to add a rights holder identifier that identifies the new rights holder to design-related information paired with the design identifier corresponding to the rights holder information received by the rights holder information receiving unit.

In the above program, it is preferable that the first server accumulation unit accumulates the design information on a blockchain, in a pair with a design identifier, in association with an NFT.

Furthermore, in the above program, it is preferable that the design-related information includes a usage condition of the design information for third parties, the program further enables a computer to function as a judgment unit configured to judge whether or not a usage condition paired with the design identifier received by the second server receiving unit is satisfied, and the first server transmitting unit transmits the design information only when the judgment unit judges that the usage condition is satisfied.

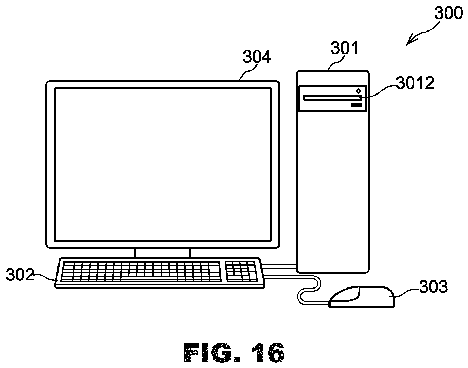

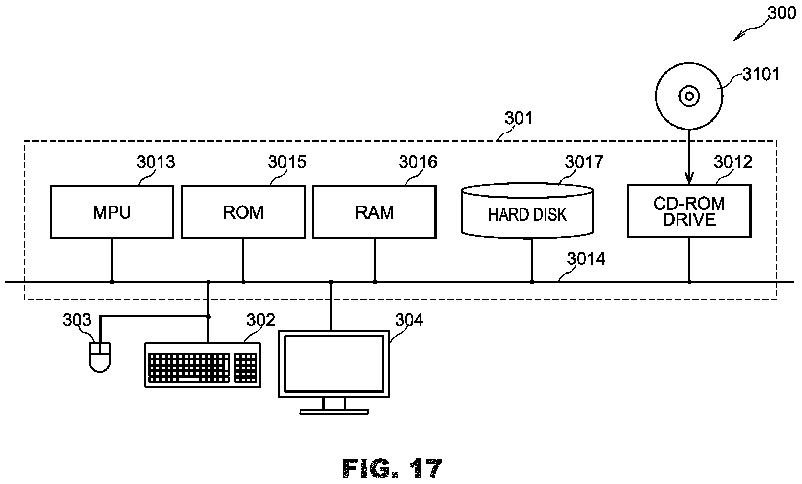

FIG. 16 shows an external appearance of a computer that executes the programs described herein to realize the beverage production apparatuses 1, the server 2, and the terminal apparatuses 3 according to the various embodiments described above. The above-described embodiments can be realized using computer hardware and a computer program executed thereon. FIG. 17 is an overview of this computer system 300, and FIG. 17 is a block diagram of the system 300.

In FIG. 16, the computer system 300 includes a computer 301 that includes a CD-ROM drive, a keyboard 302, a mouse 303, and a monitor 304.

In FIG. 17, the computer 301 includes, in addition to the CD-ROM drive 3012, an MPU 3013, a bus 3014 that is connected to the CD-ROM drive 3012 and so on, a ROM 3015 for storing programs such as a boot-up program, a RAM 3016 that is connected to the MPU 3013 and is used to temporarily store application program instructions and provide a temporary storage space, and a hard disk 3017 for storing application programs, system programs, and data. Here, although not shown in the figure, the computer 301 may further include a network card that provides connection to a LAN.

The program that enables the computer system 300 to perform the functions of the beverage production apparatuses 1 and so on according to the above-described embodiments may be stored in the CD-ROM 3101, inserted into the CD-ROM drive 3012, and furthermore transferred to the hard disk 3017. Alternatively, the program may be transmitted to the computer 301 via a network (not shown) and stored on the hard disk 3017. The program is loaded into the RAM 3016 when the program is to be executed. The program may be directly loaded from the CD-ROM 3101 or the network.

The program does not necessarily have to include an operating system (OS), a third party program, or the like that enables the computer 301 to perform the functions of the beverage production apparatuses 1 and so on according to the embodiments described above. The program need only contain the part of the instruction that calls an appropriate function (module) in a controlled manner to achieve a desired result. How the computer system 300 works is well known and the detailed descriptions thereof will be omitted.

In the above-described program, the step of transmitting information, the step of receiving information and so on do not include processing performed by hardware, for example, processing performed by a modem or an interface card in the step of transmitting (processing that can only be performed by hardware).

There may be a single computer or multiple computers executing the above-described program. That is to say, centralized processing or distributed processing may be performed.

Also, as a matter of course, in each of the above-described embodiments, two or more communication means that are present in one apparatus may be physically realized using one medium.

Also, in the above-described embodiments, each kind of processing may be realized as centralized processing that is performed by a single apparatus, or distributed processing that is performed by multiple apparatuses.

As a matter of course, the present invention is not limited to the above-described embodiments, and various changes are possible, and such variations are also included within the scope of the present invention.

### Industrial Applicability

As described above, the beverage production apparatus 1 according to the present invention has the effect of making it possible to produce a contained beverage to which a design is applied using design information transmitted from an external source, and is useful as beverage servers or the like that provide beverages.

## Claims

1. A beverage production apparatus comprising:
a design receiving unit configured to receive design information transmitted from a terminal apparatus; and
a design application unit configured to apply a design to a contained beverage, using the design information.

2. The beverage production apparatus according to claim 1, further comprising:
an instruction receiving unit configured to receive a beverage production instruction transmitted from a terminal apparatus and including a design identifier that identifies design information,
wherein the design receiving unit receives the design information identified by the design identifier contained in the beverage production instruction from a server that manages a design identifier and design information in association with each other.

3. The beverage production apparatus according to claim 1 or claim 2,
wherein the design application unit applies a design within a beverage of the contained beverage, using the design information.

4. The beverage production apparatus according to claim 1 or claim 2,
wherein the design application unit applies a design to a container of the contained beverage, using the design information.

5. The beverage production apparatus according to claim 1, further comprising:
a judgment unit configured to reference a condition storage unit in which a beverage condition that is a condition for a beverage attribute value is stored in association with design information or a design attribute value, and to judge, for the contained beverage, whether or not the design information received by the design receiving unit or a design attribute value of the design information and a beverage attribute value of the contained beverage to which the design application unit applies the design satisfy the beverage condition,
wherein the design application unit applies a design to the contained beverage, using the design information when the judgment unit judges that the beverage condition is satisfied.

6. A server comprising:
a first server receiving unit configured to receive design information from a terminal apparatus;
a first server accumulation unit configured to accumulate the design information in a storage unit in which design-related information that includes design information is stored, in a pair with a design identifier that identifies the design information, in association with a design identifier that identifies design information that is a basis for a design to be applied to a contained beverage;
a second server receiving unit configured to receive a design identifier that identifies design information to be transmitted to a beverage production apparatus;
a first server acquisition unit configured to acquire design information that is identified by the design identifier received by the second server receiving unit, from the storage unit; and
a first server transmitting unit configured to transmit the design information acquired by the first server acquisition unit.

7. The server according to claim 6,
wherein the design-related information contains a rights holder identifier that identifies a rights holder of design information, and
the server further comprises a reward processing unit configured to, when the first server transmitting unit transmits the design information, perform reward processing to reward a rights holder that is identified by a rights holder identifier paired with the design information.

8. The server according to claim 6 or claim 7, further comprising:
a third server receiving unit configured to receive a captured image associated with a design identifier;
a second server accumulation unit configured to accumulate a captured image received by the third server receiving unit, in association with the design identifier;
a fourth server receiving unit configured to receive an image viewing instruction corresponding to a design identifier from a terminal apparatus;
a second server acquisition unit configured to acquire a captured image paired with the design identifier corresponding to the image viewing instruction received by the fourth server receiving unit; and
a second server transmitting unit configured to transmit the captured image acquired by the second server acquisition unit to the terminal apparatus.

9. The server according to claim 7, further comprising:
a rights holder information receiving unit configured to receive rights holder information regarding a new rights holder of design information, corresponding to a design identifier; and
a rights holder update unit configured to add a rights holder identifier that identifies the new rights holder to design-related information paired with the design identifier corresponding to the rights holder information received by the rights holder information receiving unit.

10. The server according to claim 7,
wherein the reward processing unit performs the reward processing for a rights holder identified by the new rights holder identifier when the first server transmitting unit transmits design information paired with the new rights holder identifier.

11. The server according to claim 7,
wherein the first server accumulation unit accumulates the design information in a pair with a design identifier, in association with an NFT.

12. The server according to claim 11,
wherein the design information is associated with one or more design attribute values, and
the first server accumulation unit judges whether or not the one or more design attribute values associated with the design information satisfy a NFT condition, and if the NFT condition is satisfied, the first server accumulation unit accumulates the design information in association with the NFT, and if the NFT condition is not satisfied, the first server accumulation unit does not accumulate the design information in association with the NFT.

13. The server according to claim 7,
wherein the design-related information includes a usage condition of the design information for third parties,
the server further comprises a judgment unit configured to judge whether or not a usage condition paired with the design identifier received by the second server receiving unit is satisfied, and
the first server transmitting unit transmits the design information only when the judgment unit judges that the usage condition is satisfied.

14. A beverage production method realized using a design receiving unit and a design application unit, the beverage production method comprising:
a receiving step in which the design receiving unit receives design information transmitted from a terminal apparatus; and
a design application step in which the design application unit applies a design to a contained beverage, using the design information.

15. An information processing method realized using a server storage unit in which design-related information that includes design information is stored in association with a design identifier that identifies design information that is a basis for a design to be applied to a contained beverage, a first server receiving unit, a first server accumulation unit, a second server receiving unit, a first server acquisition unit, and a first server transmitting unit, the information processing method comprising:
a first server receiving step in which the first server receiving unit receives design information from a terminal apparatus;
a first server accumulation step in which the first server accumulation unit accumulates the design information in the server storage unit in a pair with a design identifier that identifies the design information;
a second server receiving step in which the second server receiving unit receives a design identifier that identifies design information to be transmitted to a beverage production apparatus;
a first server acquisition step in which the first server acquisition unit acquires design information that is identified by the design identifier received in the second server receiving step, from the server storage unit; and
a first server transmitting step in which the first server transmitting unit transmits the design information acquired in the first server acquisition step.

16. A program for enabling a computer to function as:
a design receiving unit configured to receive design information transmitted from a terminal apparatus; and
a design application unit configured to apply a design to a contained beverage, using design information.

17. A program for enabling a computer that is capable of accessing a server storage unit in which design-related information that includes design information is stored in association with a design identifier that identifies design information that is a basis for a design to be applied to a contained beverage, to function as:
a first server receiving unit configured to receive design information from a terminal apparatus;
a first server accumulation unit configured to accumulate the design information in the server storage unit in a pair with a design identifier that identifies the design information;
a second server receiving unit configured to receive a design identifier that identifies design information to be transmitted to a beverage production apparatus;
a first server acquisition unit configured to acquire design information that is identified by the design identifier received by the second server receiving unit, from the server storage unit; and
a first server transmitting unit configured to transmit the design information acquired by the first server acquisition unit.
